# FASCICULE DE BREVET EUROPEEN

(11) **EP 1 064 180 B1**
(45) Date de publication et mention de la délivrance du brevet: **31.07.2002**
(21) Numéro de dépôt: 99909016.0
(22) Date de dépôt: 16.03.1999
(51) Int. Cl.: B60T 13/57

(54) **SERVOMOTEUR PNEUMATIQUE A AUTO-ASSISTANCE CONTROLEE EN POSITION**
PNEUMATISCHER BREMSKRAFTVERSTÄRKER MIT IN POSITION GESTEUERTER SELBSTVERSTÄRKUNG
PNEUMATIC SERVOMOTOR WITH CONTROLLED POWER-ASSIST POSITIONING

(30) Priorité: 23.03.1998 FR 9803521
(43) Date de publication de la demande: 03.01.2001
(73) Titulaire: Bosch Systemes de Freinage, 93700 Drancy (FR)
(72) Inventeur: GAUTIER, Jean-Pierre, F-93600 Aulnay-sous-Bois (FR); LEBOISNE, Cédric, F-75011 Paris (FR); MICHON, Jean-Pierre, F-77178 Saint Pathus (FR); VERBO, Ulysse, F-93600 Aulnay-sous-Bois (FR)
(86) Numéro de dépôt international: FR9900597
(87) Numéro de publication internationale: WO9948737

(56) Documents cités:
- EP-A- 0 501 843
- EP-A- 0 509 868

## Description

La présente invention concerne un servomoteur pneumatique d'assistance au freinage

Plus précisément, l'invention concerne un servomoteur d'assistance au freinage comprenant : une enveloppe rigide; une cloison mobile délimitant, de façon étanche, une chambre avant et une chambre arrière à l'intérieur de l'enveloppe, la chambre avant étant en fonctionnement reliée en permanence à une première source de pression délivrant une première pression; un piston pneumatique se déplaçant avec la cloison mobile et présentant un moyeu monté coulissant dans une ouverture de l'enveloppe; une tige de commande mobile dans le moyeu entre une position de repos et une position d'actionnement en fonction d'une résultante de forces qui agit sur elle et qui comprend une force d'entrée exercée suivant une direction axiale d'actionnement orientée vers la chambre avant, et une force de rappel principale exercée par un ressort principal suivant une direction axiale de retour, inverse de la direction axiale d'actionnement; un plongeur logé dans un alésage du moyeu et entraîné par la tige de commande; et un clapet à trois voies comprenant lui-même un siège fixe annulaire formé sur une périphérie interne du moyeu, un siège mobile annulaire, concentrique au siège fixe et porté par le plongeur, et un obturateur tubulaire, concentrique au plongeur et au moyeu, et présentant une face frontale annulaire d'obturation, cette face frontale coopérant sélectivement avec le siège mobile pour isoler la chambre arrière vis-à-vis d'une seconde source de pression délivrant une seconde pression supérieure à la première, et cette face frontale coopèrant sélectivement avec le siège fixe pour permettre à la chambre arrière d'être reliée à la seconde source de pression.

Des dispositifs de ce type sont bien connus dans l'art antérieur, tel qu'illustré par exemple par les documents de brevets US - 3 470 697, FR - 2 532 084, et FR - 2 658 466.

De récentes recherches ont montré que bon nombre de conducteurs, confrontés à une situation de freinage d'urgence, sous-estimaient les risques réellement encourus et, après avoir freiné brutalement, relâchaient leur effort de freinage dans des circonstances où le maintien d'un effort important était au contraire absolument indispensable pour éviter l'accident.

Ce constat a conduit au développement de solutions diverses tendant à pallier l'éventuel comportement défaillant d'un conducteur inexpérimenté ou saisi de panique.

L'invention se situe dans ce contexte et a pour but de proposer une solution simple au problème du maintien d'une force de freinage importante à la suite d'un coup de frein violent.

A cette fin, le servomoteur de l'invention, par ailleurs conforme à la définition qu'en donne le préambule ci-dessus, est essentiellement caractérisé en ce que le plongeur comprend un corps cylindrique solidaire de la tige de commande et une bague de longueur axiale déterminée, montée axialement coulissante par rapport au corps cylindrique entre des butées avant et arrière du corps, une section antérieure de la bague étant engagée entre le corps cylindrique et l'alésage du moyeu, une section postérieure de la bague formant une collerette sur laquelle est défini le siège mobile, et les butées avant et arrière étant séparées l'une de l'autre par une distance supérieure à la longueur axiale de la bague, en ce qu'un ressort secondaire exerce sur la collerette une force de rappel secondaire orientée suivant la direction axiale de retour et sollicitant la collerette en direction de la butée arrière, et en ce que l'alésage du moyeu et la bague comportent des premier et second moyens respectifs de retenue réversible propres à maintenir la bague fixe par rapport a l'alésage du moyeu en dépit de la force de rappel secondaire exercée sur la bague et à permettre corrélativement à la chambre arrière d'être reliée à la seconde source de pression, ces moyens de retenue étant activés par un enfoncement de la bague dans l'alésage de course au moins égale à une course minimale déterminée, et étant désactivés par entraînement de la bague par la butée avant lorsque cette butée avant se déplace suivant la direction axiale de retour sous l'effet de la force de rappel principale.

Dans un mode de réalisation préféré de l'invention, les moyens de retenue comprennent un anneau élastique ouvert et une gorge annulaire dans laquelle cet anneau peut venir se loger de façon temporaire en exerçant une force de compression élastique dans la gorge.

Par exemple, l'anneau est logé dans une rainure interne de l'alésage du moyeu et la gorge est définie sur le corps cylindrique.

D'autres caractéristiques et avantages de l'invention ressortiront clairement de la description qui en est faite ci-après, à titre indicatif et nullement limitatif, en référence aux dessins annexés, dans lesquels :
- la Figure 1 est une vue en coupe d'un servomoteur conforme à l'invention;
- la Figure 2 est une vue en coupe du plongeur d'un servomoteur conforme à l'invention, observé au repos; et
- la Figure 3 est une vue en coupe du plongeur du servomoteur partiellement illustré à la figure 2, observé en fonctionnement.

Le servomoteur pneumatique d'assistance de l'invention comprend, de façon connue en soi, une coquille avant 1a et une coquille arrière 1b formant ensemble une enveloppe rigide 1.

Une cloison mobile 2 sépare de façon étanche l'intérieur de cette enveloppe rigide 1 et y délimite une chambre avant 3 et une chambre arrière 4, la chambre avant 3 étant en fonctionnement reliée à une première source de pression D qui délivre une première pression Pd, relativement basse.

Un piston pneumatique 5 se déplace avec la cloison mobile 2 et présente un moyeu 6 monté coulissant dans une ouverture 19 de l'enveloppe 1.

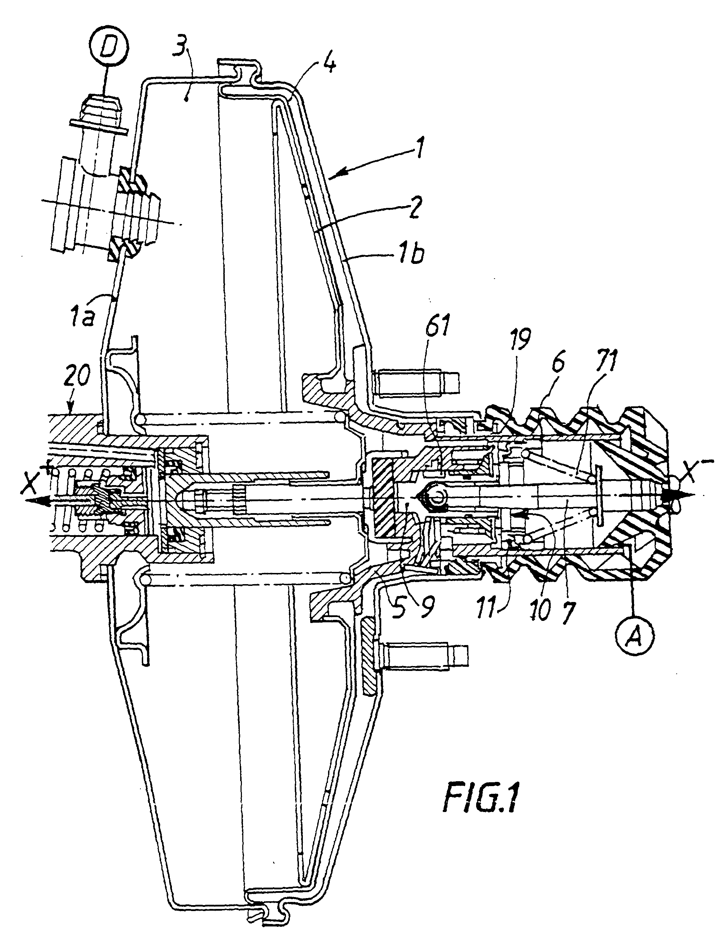

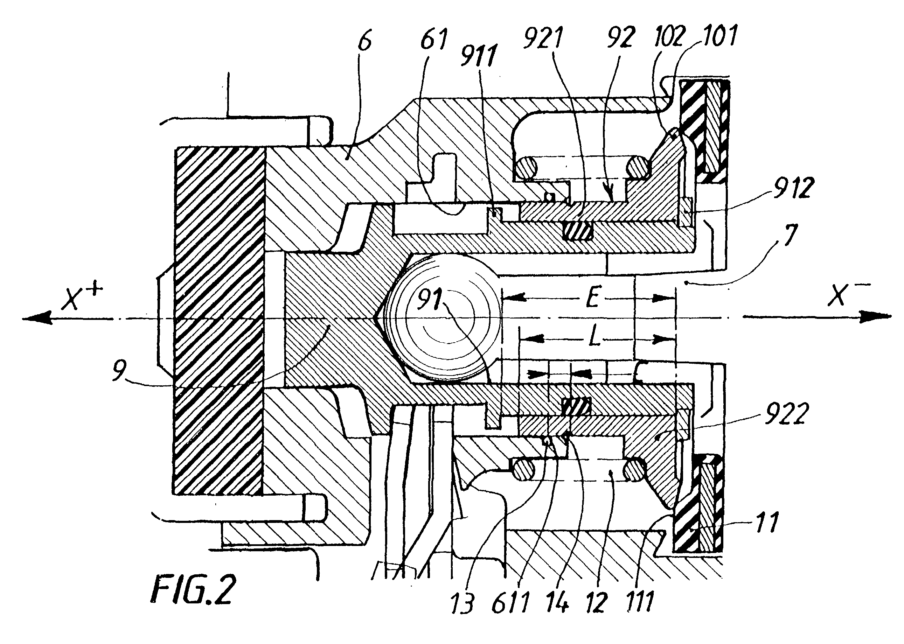

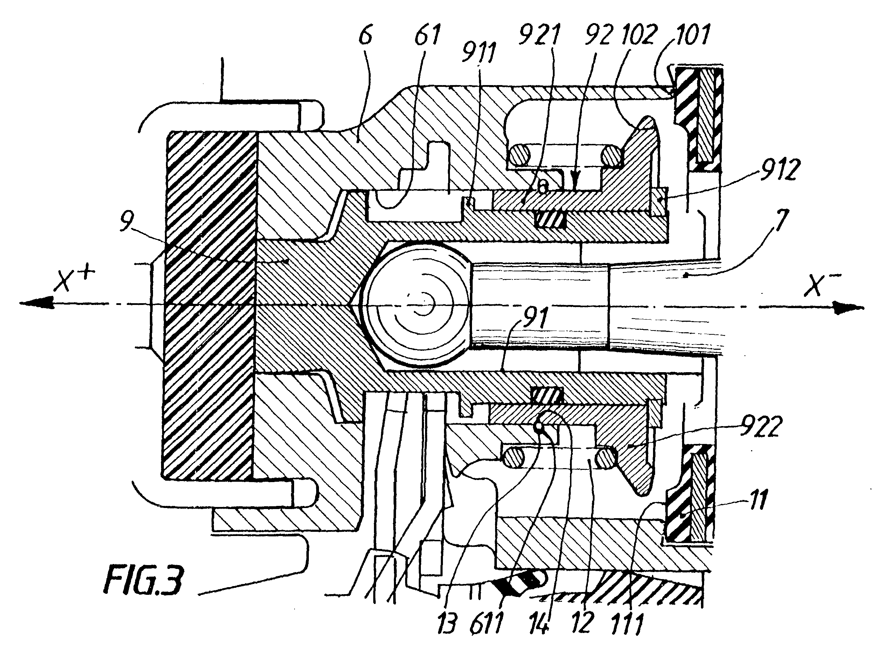

Le servomoteur est commandé par une tige de commande 7 mobile dans le moyeu 6 entre une position de repos (figures 1 et 2) et une position d'actionnement (figure 3), la position de cette tige dépendant à la fois d'une force d'entrée Fe qui est appliquée sur cette tige, suivant une direction axiale d'actionnement X+, par la pédale de frein (non représentée), et d'une force de rappel Frp exercée dans la direction inverse X- par un ressort de rappel principal 71.

Un plongeur 9, entraîné par la tige de commande 7, est monté coulissant dans un alésage 61 du moyeu 6 pour contrôler l'état d'un clapet à trois voies 10.

Ce clapet 10 est essentiellement constitué (figures 2 et 3) d'un siège fixe annulaire 101 formé à la périphérie interne du moyeu 6, d'un siège mobile annulaire 102, qui est concentrique au siège fixe 101 et porté par le plongeur 9, et d'un obturateur tubulaire 11, qui est lui-même concentrique à la fois au plongeur et au moyeu.

L'obturateur tubulaire 11 présente une face frontale annulaire d'obturation 111 destinée à coopérer, en fonction de la position du plongeur 9, soit avec le siège mobile 102, soit avec le siège fixe 101.

Lorsque le servomoteur est au repos (figures 1 et 2), la face frontale 111 de l'obturateur 11 s'applique sur le siège mobile 102 et isole la chambre arrière 4 vis-à-vis d'une seconde source de pression A, en général constituée par l'atmosphère, et qui délivre une pression Pa supérieure à la pression Pd de la première source D.

En revanche, lorsqu'une force d'entrée Fe sensiblement supérieure à la force de rappel Frp du ressort 71 est exercée sur la tige 7, cette force Fe provoque un déplacement du plongeur 9 dans la direction d'actionnement X+, de sorte que la face frontale 111 de l'obturateur 11 se décolle du siège mobile 102 en s'appliquant sur le siège fixe 101 (figure 3), la chambre arrière 4 se trouvant alors reliée à la source de pression A,

L'admission d'air dans la chambre arrière repousse la cloison mobile 2 dans la direction d'actionnement X+ et engendre une force d'assistance utilisée pour actionner le maître-cylindre 20.

Selon l'invention, comme le montrent le mieux les figures 2 et 3, le plongeur 9 comprend un corps cylindrique 91, solidaire de la tige de commande 7, et une bague 92 de longueur axiale déterminée L.

La bague 92 est montée axialement coulissante de façon étanche sur l'extérieur du corps cylindrique 91, entre une butée avant 911 et une butée arrière 912 toutes deux portées par le corps 91, ces butées avant 911 et arrière 912 étant séparées l'une de l'autre par une distance E supérieure à la longueur axiale L de la bague 92.

Une section antérieure 921 de la bague 92 est engagée dans l'espace annulaire qui sépare le corps cylindrique 91 de l'alésage 61 du moyeu, et remplit totalement cet espace suivant une direction radiale.

Une section postérieure 922 de la bague 92 est conformée en collerette et porte le siège mobile 102.

Un ressort de rappel secondaire 12 exerce sur la collerette 922 une force de rappel secondaire Frs orientée suivant la direction axiale de retour X- et sollicitant la collerette 922 en direction de la butée arrière 912.

Un anneau élastique ouvert 13, par exemple constitué par un jonc d'acier de section circulaire, est logé dans une rainure interne 611 de l'alésage 61 du moyeu pour coopérer avec une gorge 14 définie à la périphérie de la bague 92, cette gorge présentant une profondeur inférieure au rayon de la section de l'anneau 13.

L'anneau 13, qui est destiné à venir se loger de façon temporaire dans la gorge 14, est dimensionné pour exercer dans cette gorge une force de compression élastique suffisante pour maintenir la bague 92 fixe par rapport à l'alésage 61 du moyeu en résistant à la force de rappel secondaire Frs exercée sur la bague par le ressort 12, mais insuffisante pour maintenir la bague 92 fixe par rapport à l'alésage 61 du moyeu contre la force de rappel principale Frp exercée sur la tige par le ressort 71, l'anneau élastique 13 et la gorge 14 constituant ainsi des moyens de retenue réversible de la bague par rapport à l'alésage 61 du moyeu 6.

Le fonctionnement de cet agencement spécifique est le suivant.

Lorsqu'une force d'entrée Fe importante est appliquée brutalement sur la tige de commande 7, le plongeur 9 effectue, par rapport au moyeu 6 du piston 5, une course au moins égale à la course minimale C qui sépare au repos l'anneau 13 de la gorge 14.

La bague 92, entraînée par la butée arrière 912 suivant la direction d'actionnement X+, s'enfonce dans l'alésage 61 d'une façon telle que la gorge 14 atteint ou même dépasse axialement l'anneau 13, le siège mobile 102 étant pendant tout ce temps très éloigné de la face frontale 111 de l'obturateur 11, et la chambre arrière 4 étant donc reliée à la seconde source de pression A.

Que la gorge 14 ait ou non dépassé l'anneau 13 lors de ce freinage d'urgence, l'anneau 13 tombe dans la gorge 14 lorsque la pédale de frein commence à être relâchée, c'est-à-dire lorsque la force d'entrée Fe diminue, cette situation étant illustrée à la figure 3.

Cependant, comme la longueur axiale L de la bague 92 est inférieure à la distance E qui sépare les butées avant 911 et arrière 912, le décroissement ultérieur de la force d'entrée Fe, et donc le recul du plongeur 9 suivant la direction X-, sont temporairement sans effet sur les positions relatives de l'anneau 13, de la gorge 14, du siège mobile 102 et de la face frontale 111, qui restent celles qu'illustre la figure 3 aussi longtemps que la butée avant 911, tirée par la force de rappel principale Frp du ressort 71, ne vient pas elle-même tirer la bague 92 et dégager la gorge 14 de l'anneau 13.

Grâce à cet agencement, il est donc possible de maintenir grand ouvert le clapet 10 pendant la plus grande partie de la phase de défreinage qui suit un freinage d'urgence, donc de continuer à appliquer une force de freinage très supérieure à celle qui serait obtenue, sans cet agencement, par l'effort de freinage réellement fourni par le conducteur.

## Revendications

1. Servomoteur pneumatique d'assistance au freinage comprenant : une enveloppe rigide (1); une cloison mobile (2) délimitant, de façon étanche, une chambre avant (3) et une chambre arrière (4) à l'intérieur de l'enveloppe (1), la chambre avant (3) étant en fonctionnement reliée en permanence à une première source de pression (D) délivrant une première pression (Pd); un piston pneumatique (5) se déplaçant avec la cloison mobile (2) et présentant un moyeu (6) monté coulissant dans une ouverture (19) de l'enveloppe (1); une tige de commande (7) mobile dans le moyeu (6) entre une position de repos et une position d'actionnement en fonction d'une résultante de forces qui agit sur elle et qui comprend une force d'entrée (Fe) exercée suivant une direction axiale d'actionnement (X+) orientée vers la chambre avant (3), et une force de rappel principale (Frp) exercée par un ressort principal (71) suivant une direction axiale de retour (X-), inverse de la direction axiale d'actionnement (X+); un plongeur (9) logé dans un alésage (61) du moyeu (6) et entraîné par la tige de commande; et un clapet à trois voies (10) comprenant lui-même un siège fixe annulaire (101) formé sur une périphérie interne du moyeu (6), un siège mobile annulaire (102), concentrique au siège fixe (101) et porté par le plongeur (9), et un obturateur tubulaire (11), concentrique au plongeur et au moyeu, et présentant une face frontale annulaire d'obturation (111), cette face frontale (111) coopérant sélectivement avec le siège mobile (102) pour isoler la chambre arrière (4) vis-à-vis d'une seconde source de pression (A) délivrant une seconde pression (Pa) supérieure à la première (Pd), et cette face frontale (111) coopèrant sélectivement avec le siège fixe (101) pour permettre à la chambre arrière (4) d'être reliée à la seconde source de pression (A), **caractérisé en ce que** le plongeur (9) comprend un corps cylindrique (91) solidaire de la tige de commande (7) et une bague (92) de longueur axiale déterminée (L), montée axialement coulissante par rapport au corps cylindrique (91) entre des butées avant (911) et arrière (912) du corps, une section antérieure (921) de la bague (92) étant engagée entre le corps cylindrique (91) et l'alésage (61) du moyeu, une section postérieure (922) de la bague (92) formant une collerette sur laquelle est défini le siège mobile (102), et les butées avant (911) et arrière (912) étant séparées l'une de l'autre par une distance (E) supérieure à la longueur axiale (L) de la bague (92), **en ce qu'**un ressort secondaire (12) exerce sur la collerette (922) une force de rappel secondaire (Frs) orientée suivant la direction axiale de retour (X-) et sollicitant la collerette (922) en direction de la butée arrière (912), et **en ce que** l'alésage (61) du moyeu et la bague (92) comportent des premier et second moyens respectifs (13, 14) de retenue réversible propres à maintenir la bague (92) fixe par rapport à l'alésage (61) du moyeu en dépit de la force de rappel secondaire (Frs) exercée sur la bague et à permettre corrélativement à la chambre arrière (4) d'être reliée à la seconde source de pression (A), ces moyens de retenue étant activés par un enfoncement de la bague dans l'alésage (61) de course au moins égale à une course minimale déterminée (C), et étant désactivés par entraînement de la bague (92) par la butée avant (911) lorsque cette butée avant se déplace suivant la direction axiale de retour (X-) sous l'effet de la force de rappel principale (Frp).

2. Servomoteur suivant la revendication 1, **caractérisé en ce que** les moyens de retenue (13, 14) comprennent un anneau élastique ouvert (13) et une gorge annulaire (14) dans laquelle cet anneau (13) peut venir se loger de façon temporaire en exerçant une force de compression élastique dans la gorge.

3. Servomoteur suivant la revendication 2, **caractérisé en ce que** l'anneau (13) est logé dans une rainure interne (611) de l'alésage (61) du moyeu et **en ce que** la gorge (14) est définie sur la bague (92)

## Patentansprüche

1. Pneumatischer Bremsunterstützungs-Servomotor mit: einem starren Gehäuse (1); einer beweglichen Trennwand (2), die im Inneren des Gehäuses (1) eine vordere Kammer (3) und eine hintere Kammer (4) abgrenzt, wobei die vordere Kammer (3) im Betrieb permanent mit einer ersten Druckquelle (D) verbunden ist, die einen ersten Druck (Pd) liefert; einem Pneumatikkolben (5), der sich zusammen mit der beweglichen Trennwand (2) verstellt und eine Nabe (6) aufweist, die verschiebbar in einer Öffnung (19) des Gehäuses (1) angebracht ist; einer Steuerstange (7), die in der Nabe (6) zwischen einer Ruhestellung und einer Betätigungsstellung in Abhängigkeit von einer Kräfteresultierenden bewegbar ist, die auf sie einwirkt und die eine Eingangskraft (Fe) aufweist, die entlang einer zur vorderen (3) Kammer gerichteten, axialen Betätigungskraft (X+) ausgeübt wird, und eine Haupt-Rückstellkraft (Frp), die von einer Hauptfeder (71) entlang einer axialen Rückstellrichtung (X-) entgegen der axialen Betätigungsrichtung (X+) ausgeübt wird; einem Tauchkolben (9), der in einer Bohrung (61) der Nabe (6) aufgenommen ist und von der Steuerstange mitgenommen wird; und einem Dreiwege-Ventil (10), das wiederum einen ringförmigen feststehenden Sitz (101) aufweist, der an einem Innenumfang der Nabe (6) ausgebildet ist, einen ringförmigen beweglichen Sitz (102), der mit dem feststehenden Sitz (101) konzentrisch und von dem Tauchkolben (9) getragen ist, und ein rohrförmiges Verschlußelement (11), das mit dem Tauchkolben und der Nabe konzentrisch ist und eine ringförmige Verschluß-Stirnseite (111) aufweist, wobei diese Stirnseite (111) selektiv mit dem beweglichen Sitz (102) zusammenwirkt, um die hintere Kammer (4) von einer zweiten Druckquelle (A) zu isolieren, die einen zweiten Druck (Pa) liefert, der größer als der erste Druck (Pd) ist, wobei die Stirnseite (111) selektiv mit dem feststehenden Sitz (101) zusammenwirkt, um der hinteren Kammer (4) zu ermöglichen, mit der zweiten Druckquelle (A) verbunden zu sein, **dadurch gekennzeichnet, daß** der Tauchkolben (9) einen zylindrischen Körper (91) aufweist, der fest mit der Steuerstange (7) verbunden ist, und einen Ring (92) mit bestimmter axialer Länge (L), der axial verschiebbar bezüglich des zylindrischen Körpers (91) zwischen einem vorderen Anschlag (911) und einem hinteren Anschlag (912) des Körpers angebracht ist, wobei ein vorderer Abschnitt (921) des Ringes (92) zwischen dem zylindrischen Körper (91) und der Bohrung (61) der Nabe angeordnet ist, wobei ein hinterer Abschnitt (922) des Ringes (92) einen Bund bildet, an welchem der bewegliche Sitz (102) gebildet ist, und wobei der vordere Anschlag (911) und der hintere Anschlag (912) voneinander mit einem Abstand (E) entfernt sind, der größer als die axiale Länge (L) des Ringes (92) ist, daß eine Sekundärfeder (12) auf den Bund (922) eine Sekundär-Rückstellkraft (Frs) ausübt, die entlang der axialen Rückstellrichtung (X-) ausgerichtet ist und den Bund (922) in Richtung zum hinteren Anschlag (912) beaufschlagt, und daß die Bohrung (61) der Nabe und der Ring (92) ein erstes reversibles Rückhaltemittel (13) bzw ein zweites reversibles Rückhaltemittel (14) aufweisen, die geeignet sind, den Ring (92) fest bezüglich der Bohrung (61) der Nabe trotz der Sekundär-Rückstellkraft (Frs) zu halten, die auf den Ring ausgeübt wird, und die es entsprechend der hinteren Kammer (4) ermöglichen, mit der zweiten Druckkammer (A) verbunden zu sein, wobei die Rückstellmittel aktiviert werden durch ein Eindrücken des Ringes in die Bohrung (61) mit einem Weg, der wenigstens gleich einem bestimmten Minimalweg (C) ist, und die deaktiviert werden durch ein Mitnehmen des Ringes (92) durch den vorderen Anschlag (911), wenn dieser vordere Anschlag sich entlang der axialen Rückstellrichtung (X-) unter der Wirkung der Haupt-Rückstellkraft (Frp) verstellt.

2. Servomotor nach Anspruch 1, **dadurch gekennzeichnet, daß** die Rückhaltemittel (13, 14) einen geöffneten elastischen Reif (13) und eine ringförmige Nut (14) aufweisen, in welcher sich der Reif (13) temporär anordnen kann, indem er in der Nut eine elastische Druckkraft ausübt.

3. Servomotor nach Anspruch 2, **dadurch gekennzeichnet, daß** der Reif (13) in einer Innenrille (611) der Bohrung (61) der Nabe angeordnet ist und daß die Nut (14) an dem Ring (92) gebildet ist.

## Claims

1. Pneumatic brake booster comprising: a rigid casing (1); a moving partition (2) delimiting, in leaktight fashion, a front chamber (3) and a rear chamber (4) inside the casing (1), the front chamber (3) in operation being permanently connected to a first pressure source (D) delivering a first pressure (Pd); a pneumatic piston (5) moving with the moving partition (2) and having a hub (6) slideably mounted in an opening (19) of the casing (1); an operating rod (7) that can move in the hub (6) between a position of rest and an actuating position as a function of a resultant of forces which acts on it and which comprises an input force (Fe) exerted in an axial actuating direction (X+) directed towards the front chamber (3) and a main return force (Frp) exerted by a main spring (71) in an axial return direction (X-), the opposite of the axial actuating direction (X+); a plunger (9) housed in a bore (61) of the hub (6) and driven by the operating rod; and a three-way valve (10) itself comprising a fixed annular seat (101) formed on an internal periphery of the hub (6), a moving annular seat (102), concentric with the fixed seat (101) and borne by the plunger (9), and a tubular shutter (11), concentric with the plunger and with the hub, and exhibiting a frontal annular shut-off face (111), this frontal face (111) interacting selectively with the moving seat (102) to isolate the rear chamber (4) from a second pressure source (A) delivering a second pressure (Pa) higher than the first (Pb), and this frontal face (111) interacting selectively with the fixed seat (101) to allow the rear chamber (4) to be connected to the second pressure source (A), **characterized in that** the plunger (9) comprises a cylindrical body (91) secured to the operating rod (7) and a collar (92) of determined axial length (L), mounted to slide axially with respect to the cylindrical body (91) between a front stop (911) and a rear stop (912) of the body, an anterior section (921) of the collar (92) being engaged between the cylindrical body (91) and the bore (61) of the hub, a posterior section (922) of the collar (92) forming a flange on which the moving seat (102) is defined, and the front stop (911) and rear stop (912) being separated from one another by a distance (E) that exceeds the axial length (L) of the collar (92), **in that** a secondary spring (12) exerts on the flange (922) a secondary return force (Frs) directed in the axial return direction (X-) and urging the flange (922) towards the rear stop (912), and **in that** the bore (61) in the hub and the collar (92) comprise first and second respective reversible-retention means (13, 14) capable of keeping the collar (92) stationary with respect to the bore (61) in the hub in spite of the secondary return force (Frs) exerted on the collar and consequently allowing the rear chamber (4) to be connected to the second pressure source (A), these retention means being activated by the collar being pushed into the bore (61) by an amount at least equal to a minimum determined travel (C), and being deactivated by the collar (92) being driven along by the front stop (911) when this front stop moves in the axial return direction (X-) under the effect of the main return force (Frp).

2. Booster according to Claim 1, **characterized in that** the retention means (13, 14) comprise an open elastic ring (13) and an annular channel (14) in which this ring (13) can be housed temporarily, exerting an elastic compression force in the channel.

3. Booster according to Claim 2, **characterized in that** the ring (13) is housed in an internal groove (611) of the bore (61) of the hub and **in that** the channel (14) is defined on the collar (92).
